# FASCICULE DE BREVET EUROPEEN

(11) **EP 4 419 402 B1**
(45) Date de publication et mention de la délivrance du brevet: **06.08.2025**
(21) Numéro de dépôt: 22789639.6
(22) Date de dépôt: 15.09.2022
(51) Int. Cl.: B60W 30/14

(54) **PROCÉDÉ ET SYSTÈME POUR GÉRER LE FONCTIONNEMENT D'UN RÉGULATEUR DE VITESSE ADAPTATIF D'UN PREMIER VÉHICULE AUTOMOBILE SELON LA STABILITÉ LATÉRALE D'UN DEUXIÈME VÉHICULE AUTOMOBILE PRÉCÉDENT**
VERFAHREN UND SYSTEM ZUR VERWALTUNG DES BETRIEBS EINES ADAPTIVEN GESCHWINDIGKEITSREGLERS EINES ERSTEN KRAFTFAHRZEUGS IN ABHÄNGIGKEIT DER SEITENSTABILITÄT EINES ZWEITEN VORAUSFAHRENDEN KRAFTFAHRZEUGS
METHOD AND SYSTEM FOR MANAGING THE OPERATION OF AN ADAPTIVE CRUISE CONTROL OF A FIRST MOTOR VEHICLE ACCORDING TO THE LATERAL STABILITY OF A SECOND, PRECEDING MOTOR VEHICLE

(30) Priorité: 21.10.2021 FR 2111217
(43) Date de publication de la demande: 28.08.2024
(73) Titulaire: Stellantis Auto SAS, 78300 Poissy (FR)
(72) Inventeur: VIVET, Luc, 75016 Paris 16 (FR); TOUIL, Lhassane, Kenitra, 14000 (MA); NACIRI, Yassine, EL JADIDA, 24020 (MA)
(74) Mandataire: ESIP
(86) Numéro de dépôt international: PCT/FR2022/051741
(87) Numéro de publication internationale: WO 2023/067258

(56) Documents cités:
- US-A1- 2014 188 366
- US-A1- 2016 200 321
- US-A1- 2017 158 237

## Description

### Domaine technique de l'invention

La présente invention concerne le domaine des régulateurs de vitesse pour véhicules automobiles. L'invention porte en particulier sur un procédé de gestion du fonctionnement d'un régulateur de vitesse adaptatif d'un véhicule automobile en lien avec un deuxième véhicule circulant devant le premier véhicule. L'invention concerne également un système informatique mettant en œuvre un tel procédé. L'invention s'applique notamment aux voitures, aux poids lourds, aux autobus, aux véhicules utilitaires, etc.

### État de la technique antérieure

On sait que certains véhicules automobiles actuels sont équipés de régulateurs de vitesse adaptatifs qui permettent de maintenir une vitesse de consigne préalablement établie et, si nécessaire, d'adapter, i.e. augmenter ou réduire, la vitesse en fonction d'une distance de séparation avec un autre véhicule qui est situé devant. On note cependant que, lorsque le véhicule précédent circule sur une voie de circulation adjacente à celle sur laquelle circule le véhicule porteur du régulateur de vitesse adaptatif et que le véhicule précédent aborde un virage, il peut se produire des cas où le régulateur de vitesse adaptatif produit des accélérations ou des décélérations intempestives qui sont inconfortables pour les occupants du véhicule car l'appareil de détection (e.g. radar, lidar, etc.) sur lequel le régulateur de vitesse adaptatif base son fonctionnement perd momentanément la trace du véhicule précédent. De même, ces situations peuvent également se produire lorsque le véhicule précédent circule sur une voie adjacente à celle sur laquelle circule le véhicule porteur du régulateur de vitesse adaptatif et que le véhicule précédent réalise une manœuvre de changement de voie pour rejoindre la voie sur laquelle circule le véhicule porteur du régulateur de vitesse adaptatif.

En outre l'état de la technique est connu du document US2014/188366 A1.

### Résumé de l'invention

L'invention vise à pallier ces inconvénients. L'invention a en effet pour but de fournir un procédé et un système qui permettent à un régulateur de vitesse adaptatif d'un véhicule automobile de mieux gérer ces situations de virage et/ou de changement de voie du véhicule précédent de sorte à minimiser le risque de voir se produire des accélérations et/ou des décélérations intempestives. Par ce biais, l'invention vise à améliorer le confort des véhicules automobiles équipés de régulateurs de vitesse adaptatifs.

Ce but est atteint, selon un premier objet de l'invention, au moyen d'un procédé de gestion, par un système informatique embarqué à bord d'un premier véhicule automobile, du fonctionnement d'un régulateur de vitesse adaptatif du premier véhicule en lien avec un deuxième véhicule automobile circulant devant le premier véhicule, le procédé comprenant les étapes de :
i) déterminer des données caractérisant une valeur courante de stabilité latérale du deuxième véhicule à partir de données caractérisant une valeur antérieure de stabilité latérale du deuxième véhicule et de données caractérisant la valeur absolue de la différence entre la composante latérale de vitesse du premier véhicule et la composante latérale de vitesse du deuxième véhicule ;
ii) déterminer des données caractérisant une valeur d'un coefficient de rapidité de décision à partir des données caractérisant une valeur courante de stabilité latérale du deuxième véhicule ; et
iii) gérer le fonctionnement du régulateur de vitesse adaptatif en fonction des données caractérisant une valeur d'un coefficient de rapidité de décision.

Selon une variante, au cours de l'étape i), les données caractérisant la valeur absolue de la différence entre la composante latérale de vitesse du premier véhicule et la composante latérale de vitesse du deuxième véhicule peuvent être utilisées pour déterminer des données caractérisant une valeur de variation de stabilité latérale.

Selon une autre variante, les données caractérisant une valeur de variation de stabilité latérale peuvent être déterminées à partir d'une première fonction affine par morceaux.

Selon une autre variante, la première fonction affine par morceaux peut être une fonction affine constante positive entre 0 et une première valeur seuil préétablie, une fonction affine décroissante entre la première valeur seuil et une deuxième valeur seuil préétablie et une fonction affine constante négative à partir de la deuxième valeur seuil.

Selon une autre variante, au cours de l'étape ii), les données caractérisant une valeur d'un coefficient de rapidité de décision peuvent être déterminées à partir d'une deuxième fonction affine par morceaux.

Selon une autre variante, la deuxième fonction affine par morceaux peut être une fonction affine constante qui prend une valeur constante inférieure à 1 entre 0 et une troisième valeur seuil préétablie, une fonction affine croissante entre la troisième valeur seuil et une quatrième valeur seuil préétablie et une fonction affine constante qui prend une valeur constante supérieure à 1 à partir de la quatrième valeur seuil.

En outre, l'invention a également pour objet un système pour gérer le fonctionnement d'un régulateur de vitesse adaptatif d'un premier véhicule automobile en lien avec un deuxième véhicule automobile circulant devant le premier véhicule, le système comprenant au moins une unité de traitement d'informations, comprenant au moins un processeur, et un support de stockage de données configurés pour mettre en œuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a également pour objet un support utilisable dans un ordinateur sur lequel un programme tel que décrit ci-dessus est enregistré.

Enfin, l'invention a aussi pour objet un véhicule automobile comprenant un système tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un diagramme fonctionnel d'un système selon l'invention ;
[Fig. 2] est un organigramme illustrant les étapes d'un procédé selon l'invention ;
[Fig. 3] est un graphique illustrant une première fonction affine par morceaux utilisée pour la mise en œuvre d'une étape d'un procédé selon l'invention ; et
[Fig. 4] est un graphique illustrant une deuxième fonction affine par morceaux utilisée pour la mise en œuvre d'une étape d'un procédé selon l'invention.

### Description détaillée de l'invention

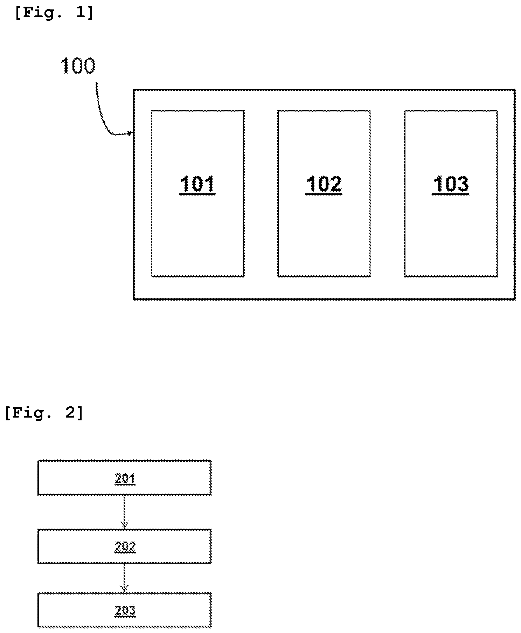

Selon l'invention, un système 100 pour gérer le fonctionnement d'un régulateur de vitesse adaptatif d'un premier véhicule automobile en lien avec un deuxième véhicule automobile circulant devant le premier véhicule est un système informatique, représenté à la figure 1, qui comprend une unité de traitement d'informations 101, comprenant un ou plusieurs processeurs, un support de stockage de données 102 et au moins une interface d'entrée et sortie 103 permettant la réception et l'émission de données.

Selon certains modes de réalisation, le système 100 selon l'invention est embarqué dans un véhicule automobile (e.g. voitures, poids lourds, autobus, véhicules utilitaires, etc.) et il est hébergé sur un ou plusieurs des calculateurs ou autres unités de commande électroniques du véhicule. Selon d'autres modes de réalisation, le système 100 selon l'invention est hébergé sur un calculateur d'un véhicule automobile et il interagit par le biais de son interface d'entrée et sortie 103 avec un calculateur d'un régulateur de vitesse adaptatif du véhicule. Selon le mode de réalisation préféré, le système 100 selon l'invention fait partie intégrante d'un calculateur d'un régulateur de vitesse adaptatif d'un véhicule automobile. Par conséquent, quel que soit le mode de réalisation de l'invention, le système 100 selon l'invention est toujours en mesure d'interagir, par le biais de son interface d'entrée et sortie 103, non seulement avec un régulateur de vitesse adaptatif d'un véhicule automobile, mais également, via un tel régulateur de vitesse adaptatif, avec tout autre appareil qui équipe et/ou interagit avec un régulateur de vitesse adaptatif d'un véhicule automobile. Et, selon l'invention, un régulateur de vitesse adaptatif d'un véhicule automobile comprend au moins appareil de mesure de vitesse (e.g. compteur de vitesse, accéléromètre, centrale inertielle, etc.), qui permet en particulier de mesurer les composantes longitudinales et latérales de vitesse, il inclut au moins un appareil de détection (e.g. appareil de télédétection par laser, appareil de radiodétection, caméra, capteur à ultrasons, etc.), qui permet de mesurer les composantes longitudinales et latérales de vitesse d'un véhicule précédent, et il est pourvu d'au moins un calculateur qui, en fonction de données qui sont générées par l'appareil de mesure de vitesse et par l'appareil de détection, peut contrôler le fonctionnement de certains organes qui gouvernent le déplacement du véhicule (e.g. unité de contrôle moteur, circuit de freinage, etc.) pour ainsi permettre la réalisation autonome de phases d'accélération ou de décélération. Ainsi, en interagissant avec ou en faisant partie intégrante d'un tel régulateur de vitesse adaptatif d'un véhicule automobile, le système 100 selon l'invention est notamment en mesure de déterminer aussi bien la composante latérale de vitesse du véhicule qu'il équipe que celle d'un autre véhicule automobile situé devant.

Selon l'invention, tous les éléments décrits ci-dessus contribuent pour permettre au système 100 selon l'invention de mettre en œuvre, a bord d'un premier véhicule automobile, un procédé de gestion du fonctionnement d'un régulateur de vitesse adaptatif du premier véhicule en lien avec un deuxième véhicule automobile circulant devant le premier véhicule, tel que décrit ci-dessous en lien avec les figures 2 à 4.

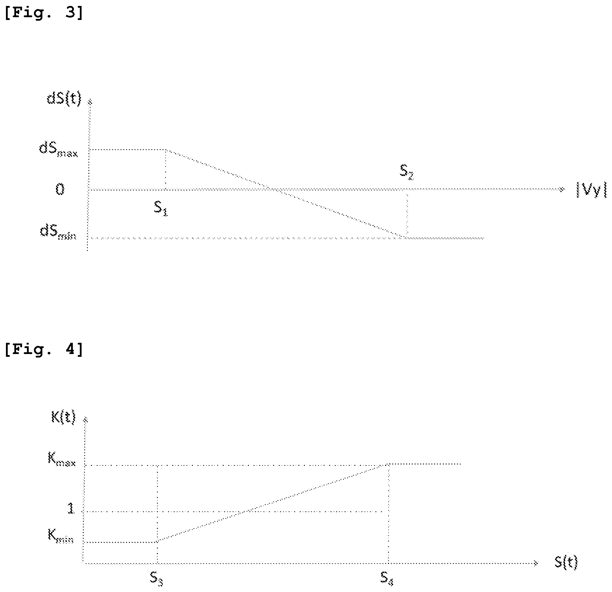

Selon une première étape 201 du procédé selon l'invention, le système 100 selon l'invention détermine des données caractérisant une valeur courante de stabilité latérale du deuxième véhicule à partir de données caractérisant une valeur antérieure de stabilité latérale du deuxième véhicule et de données caractérisant la valeur absolue de la différence entre la composante latérale de vitesse du premier véhicule et la composante latérale de vitesse du deuxième véhicule. Plus spécifiquement, le système 100 selon l'invention détermine les données caractérisant une valeur courante de stabilité latérale du deuxième véhicule, *S(t),* en utilisant les données caractérisant la valeur absolue de la différence entre la composante latérale de vitesse du premier véhicule et la composante latérale de vitesse du deuxième véhicule, |*Vy*|, pour déterminer en premier lieu des données caractérisant une valeur de variation de stabilité latérale, *dS(t).* Et pour déterminer les composantes latérales de vitesse du premier et du deuxième véhicules, le système 100 selon l'invention interagit avec le régulateur de vitesse adaptatif du premier véhicule, qui, au moyen de son appareil de mesure de vitesse et de son appareil de détection, est en mesure de déterminer aussi bien la composante latérale de vitesse du premier véhicule que celle du deuxième véhicule. Ensuite, sur la base de ces composantes latérales de vitesse du premier et du deuxième véhicule, le système 100 selon l'invention détermine la valeur de variation de stabilité latérale *dS(t)* en utilisant une première fonction affine par morceaux, telle que celle représentée à la figure 3, qui est une fonction affine constante positive, qui prend une valeur constante positive, *dSₘₐₓ,* entre 0 et une première valeur seuil préétablie, *S₁*, une fonction affine décroissante entre la première valeur seuil *S₁* et une deuxième valeur seuil préétablie, *S₂*, et une fonction affine constante négative, qui prend une valeur constante négative, *dSₘᵢₙ,* à partir de la deuxième valeur seuil *S₂*.

Puis, sur la base de cette valeur de variation de stabilité, le système 100 selon l'invention résout ensuite l'équation *S(t)=S(t-dt)+dS(t),* où *S(t-dt)* est la valeur antérieure de stabilité latérale du deuxième véhicule, i.e. la valeur de stabilité latérale qui a été calculé antérieurement, par exemple 100ms plus tôt. Ainsi, comme on le comprend à la lecture de la figure 3, plus la valeur absolue de la différence entre les composantes latérales de vitesse des deux véhicules est grande, plus la stabilité latérale du deuxième véhicule décroît. Au contraire, plus la valeur absolue de la différence entre les composantes latérales de vitesse des deux véhicules est faible, plus la stabilité latérale du deuxième véhicule augmente.

Ensuite, selon une deuxième étape 202 du procédé selon l'invention, le système 100 selon l'invention détermine des données caractérisant une valeur d'un coefficient de rapidité de décision à partir des données caractérisant une valeur courante de stabilité latérale du deuxième véhicule. Pour ce faire, le système 100 selon l'invention utilise à ce stade une deuxième fonction affine par morceaux, telle que celle représentée à la figure 4, sur laquelle il se base pour déterminer une valeur d'un coefficient de rapidité de décision à l'instant courant *K(t).*

Et, comme on le voit sur la figure, le coefficient de rapidité de décision à l'instant courant *K(t)* est déterminé en fonction de la valeur courante de stabilité latérale du deuxième véhicule *S(t),* qui a été déterminée au cours de la première étape 201 du procédé. Plus spécifiquement, la deuxième fonction affine par morceaux est une fonction affine constante qui prend une valeur constante inférieure à 1, Kₘᵢₙ, entre 0 et une troisième valeur seuil préétablie, S₃, une fonction affine croissante entre la troisième valeur seuil S₃ et une quatrième valeur seuil préétablie, S₄, et une fonction affine constante qui prend une valeur constante supérieure à 1, Kₘₐₓ, à partir de la quatrième valeur seuil S₄.

Enfin, selon une troisième et ultime étape 203 du procédé, le système selon l'invention gère le fonctionnement du régulateur de vitesse adaptatif en fonction des données caractérisant une valeur d'un coefficient de rapidité de décision qui ont été déterminées au cours de l'étape précédente 202 du procédé. Ainsi, comme on le comprend à la lecture de la figure 4, plus la stabilité latérale du deuxième véhicule est faible, plus le régulateur de vitesse adaptatif va ralentir sa prise de décision, i.e. le temps qu'il va prendre pour réguler la vitesse du premier véhicule. Au contraire, plus la stabilité du deuxième véhicule est grande, plus le régulateur de vitesse adaptatif va anticiper sa prise de décision pour réguler la vitesse du premier véhicule. De cette manière, le système 100 selon l'invention va précisément ralentir sa prise de décision dans les situations de conduite telles que celles évoquées en préambule, i.e. ces situations dans lesquelles le deuxième véhicule aborde un virage ou s'insère depuis une voie adjacente dans la voie dans laquelle circule le premier véhicule. Par ce biais, le système 100 selon l'invention va donc pouvoir minimiser le risque de voir des accélérations ou des décélérations intempestives se produire.

Par conséquent, aux termes du procédé et du système selon l'invention décrits ci-dessus, une solution existe pour permettre à un régulateur de vitesse adaptatif d'un véhicule automobile de mieux gérer ces situations de virage et/ou de changement de voie du véhicule précédent, en minimisant ainsi le risque de voir des accélérations et/ou des décélérations intempestives se produire. Par ce biais, l'invention améliore indéniablement le confort des véhicules automobiles équipés de régulateurs de vitesse adaptatifs.

## Revendications

1. Procédé de gestion, par un système informatique (100) embarqué à bord d'un premier véhicule automobile, du fonctionnement d'un régulateur de vitesse adaptatif du premier véhicule en lien avec un deuxième véhicule automobile circulant devant le premier véhicule, **caractérisé en ce que** le procédé comprend les étapes de :
i) déterminer des données caractérisant une valeur courante de stabilité latérale du deuxième véhicule à partir de données caractérisant une valeur antérieure de stabilité latérale du deuxième véhicule et de données caractérisant la valeur absolue de la différence entre la composante latérale de vitesse du premier véhicule et la composante latérale de vitesse du deuxième véhicule ;
ii) déterminer des données caractérisant une valeur d'un coefficient de rapidité de décision à partir des données caractérisant une valeur courante de stabilité latérale du deuxième véhicule ; et
iii) gérer le fonctionnement du régulateur de vitesse adaptatif en fonction des données caractérisant une valeur d'un coefficient de rapidité de décision.

2. Procédé selon la revendication 1, **caractérisé en ce que,** au cours de l'étape i), les données caractérisant la valeur absolue de la différence entre la composante latérale de vitesse du premier véhicule et la composante latérale de vitesse du deuxième véhicule sont utilisées pour déterminer des données caractérisant une valeur de variation de stabilité latérale.

3. Procédé selon la revendication 2, **caractérisé en ce que** les données caractérisant une valeur de variation de stabilité latérale sont déterminées à partir d'une première fonction affine par morceaux.

4. Procédé selon la revendication 3, **caractérisé en ce que** la première fonction affine par morceaux est une fonction affine constante positive entre 0 et une première valeur seuil préétablie, une fonction affine décroissante entre la première valeur seuil et une deuxième valeur seuil préétablie et une fonction affine constante négative à partir de la deuxième valeur seuil.

5. Procédé selon l'une des revendication précédentes, **caractérisé en ce que,** au cours de l'étape ii), les données caractérisant une valeur d'un coefficient de rapidité de décision sont déterminées à partir d'une deuxième fonction affine par morceaux.

6. Procédé selon la revendication 5, **caractérisé en ce que** la deuxième fonction affine par morceaux est une fonction affine constante qui prend une valeur constante inférieure à 1 entre 0 et une troisième valeur seuil préétablie, une fonction affine croissante entre la troisième valeur seuil et une quatrième valeur seuil préétablie et une fonction affine constante qui prend une valeur constante supérieure à 1 à partir de la quatrième valeur seuil.

7. Système (100) pour gérer le fonctionnement d'un régulateur de vitesse adaptatif d'un premier véhicule automobile en lien avec un deuxième véhicule automobile circulant devant le premier véhicule, **caractérisé en ce que** le système comprend au moins une unité de traitement d'informations (101), comprenant au moins un processeur, et un support de stockage de données (102) configurés pour mettre en œuvre un procédé selon l'une quelconque des revendications précédentes.

8. Programme d'ordinateur comprenant des instructions de code de programme pour l'exécution des étapes d'un procédé selon l'une quelconque des revendications 1 à 6 lorsque ledit programme est exécuté sur un ordinateur.

9. Support utilisable dans un ordinateur, **caractérisé en ce qu'**un programme selon la revendication 8 y est enregistré.

10. Véhicule automobile, **caractérisé en ce qu'**il comprend un système selon la revendication 7.

## Patentansprüche

1. Verfahren zum Steuern der Betätigung der adaptiven Geschwindigkeitsregelung des ersten Fahrzeugs durch ein in ein erstes Kraftfahrzeug eingebettetes Computersystem (100) in Verbindung mit einem zweiten Kraftfahrzeug, das vor dem ersten Fahrzeug fährt, **dadurch gekennzeichnet, dass** das Verfahren die folgenden Schritte umfasst:
i) Ermittlung von Daten, die einen aktuellen Seitenstabilitätswert des zweiten Fahrzeugs charakterisieren, aus Daten, die einen früheren Seitenstabilitätswert des zweiten Fahrzeugs charakterisieren, und Daten, die den Absolutwert der Differenz zwischen der Quergeschwindigkeitskomponente des ersten Fahrzeugs und der Quergeschwindigkeitskomponente des zweiten Fahrzeugs charakterisieren;
ii) aus den Daten, die den Wert des Geschwindigkeitskoeffizienten der Entscheidung charakterisieren, aus den Daten zu bestimmen, die den aktuellen Wert der Querstabilität des zweiten Fahrzeugs charakterisieren; und
iii) Verwalten Sie den Betrieb der adaptiven Geschwindigkeitsregelung auf der Grundlage von Daten, die den Wert eines Entscheidungsgeschwindigkeitskoeffizienten charakterisieren.

2. Verfahren nach Anspruch 1, **dadurch gekennzeichnet, dass** in Schritt i die Daten, die den Absolutwert der Differenz zwischen der Quergeschwindigkeitskomponente des ersten Fahrzeugs und der Quergeschwindigkeitskomponente des zweiten Fahrzeugs charakterisieren, zur Bestimmung von Daten verwendet werden, die einen Wert der Querstabilitätsvariation charakterisieren.

3. Verfahren nach Anspruch 2, **dadurch gekennzeichnet, dass** die Daten, die einen Wert der Variation der Querstabilität charakterisieren, aus einer ersten stückweisen affinen Funktion bestimmt werden.

4. Verfahren nach Anspruch 3, **dadurch gekennzeichnet, dass** die erste stückweise affine Funktion eine positive konstante affine Funktion zwischen 0 und einem ersten vorgegebenen Schwellenwert, eine abnehmende affine Funktion zwischen dem ersten Schwellenwert und einem zweiten vorgegebenen Schwellenwert und eine negative konstante affine Funktion aus dem zweiten Schwellenwert ist.

5. Verfahren nach einem der vorhergehenden Ansprüche, **dadurch gekennzeichnet, dass** in Schritt ii) die Daten, die einen Wert eines Entscheidungsgeschwindigkeitskoeffizienten charakterisieren, aus einer zweiten stückweisen affinen Funktion bestimmt werden.

6. Verfahren nach Anspruch 5, **dadurch gekennzeichnet, dass** die zweite stückweise affine Funktion eine konstante affine Funktion ist, die einen konstanten Wert von weniger als 1 zwischen 0 und einem dritten vorgegebenen Schwellenwert, eine zunehmende affine Funktion zwischen dem dritten Schwellenwert und einem vierten vorgegebenen Schwellenwert und eine konstante affine Funktion annimmt, die einen konstanten Wert größer als 1 aus dem vierten Schwellenwert nimmt.

7. System (100) zum Steuern des Betriebs der adaptiven Geschwindigkeitsregelung eines ersten Kraftfahrzeugs in Verbindung mit einem zweiten Kraftfahrzeug, das vor dem ersten Fahrzeug fährt, **dadurch gekennzeichnet, dass** das System mindestens eine Informationsverarbeitungseinheit (101) umfasst, die mindestens einen Prozessor umfasst, und ein Datenspeichermedium (102), das konfiguriert ist, ein Verfahren nach einem der vorhergehenden Ansprüche auszuführen.

8. Computerprogramm, umfassend Programmcodeanweisungen zum Ausführen von Schritten eines Verfahrens nach einem der Ansprüche 1 bis 6, wenn das Programm auf einem Computer ausgeführt wird.

9. Medium, das für den Einsatz in einem Computer geeignet ist, **dadurch gekennzeichnet, dass** darin ein Programm nach Anspruch 8 gespeichert ist.

10. Kraftfahrzeug, **dadurch gekennzeichnet, dass** es ein System nach Anspruch 7 umfasst.

## Claims

1. A method for managing, by a computer system (100) embedded in a first motor vehicle, the operation of adaptive cruise control of the first vehicle in connection with a second motor vehicle travelling in front of the first vehicle, **characterised in that** the method comprises the steps of:
i) determine data characterizing a current lateral stability value of the second vehicle from data characterizing a previous lateral stability value of the second vehicle and data characterizing the absolute value of the difference between the lateral speed component of the first vehicle and the lateral speed component of the second vehicle;
ii) determine data characterizing a value of a coefficient of speed of decision from the data characterizing a current value of lateral stability of the second vehicle; and
iii) Manage the operation of adaptive cruise control based on data characterizing a value of a decision speed coefficient.

2. A method according to claim 1, **characterised in that,** in step (i), the data characterising the absolute value of the difference between the lateral speed component of the first vehicle and the lateral speed component of the second vehicle are used to determine data characterising a value of lateral stability variation.

3. A method according to claim 2, **characterised in that** the data characterising a value of variation in lateral stability are determined from a first piecewise affine function.

4. A method according to claim 3, **characterized in that** the first piecewise affine function is a positive constant affine function between 0 and a first predetermined threshold value, a decreasing affine function between the first threshold value and a second predetermined threshold value, and a negative constant affine function from the second threshold value.

5. A method according to one of the preceding claims, **characterised in that** in step (ii) the data characterising a value of a speed of decision coefficient are determined from a second piecewise affine function.

6. A method according to claim 5, **characterized in that** the second piecewise affine function is a constant affine function which takes a constant value of less than 1 between 0 and a third predetermined threshold value, an increasing affine function between the third threshold value and a fourth predetermined threshold value, and a constant affine function which takes a constant value greater than 1 from the fourth threshold value.

7. A system (100) for managing the operation of adaptive cruise control of a first motor vehicle in connection with a second motor vehicle travelling in front of the first vehicle, **characterized in that** the system comprises at least one information processing unit (101), comprising at least one processor, and a data storage medium (102) configured to carry out a method according to any one of the preceding claims.

8. A computer program comprising program code instructions for performing steps of a method according to any one of claims 1 to 6 when said program is executed on a computer.

9. A medium suitable for use in a computer, **characterised in that** a program according to claim 8 is stored therein.

10. A motor vehicle, **characterised in that** it comprises a system according to claim 7.
